# EUROPÄISCHE PATENTSCHRIFT

(11) **EP 1 892 136 B1**
(45) Veröffentlichungstag und Bekanntmachung des Hinweises auf die Patenterteilung: **02.12.2009**
(21) Anmeldenummer: 07010759.4
(22) Anmeldetag: 31.05.2007
(51) Int. Cl.: B60J 7/22

(54) **Cabriolet mit zwei voneinander beabstandete Überrollbügeln und einem Windschott**
Convertible with two roll bars with a separation distance and a wind breaker
Cabriolet doté de deux arceaux de sécurité mutuellement opposés et d'un pare-vent

(30) Priorität: 25.08.2006 DE 102006039950
(43) Veröffentlichungstag der Anmeldung: 27.02.2008
(73) Patentinhaber: Dr. Ing. h.c. F. Porsche Aktiengesellschaft, 70435 Stuttgart (DE)
(72) Erfinder: Fröschle, Mathias, 73760 Ostfildern (DE)

(56) Entgegenhaltungen:
- EP-A- 0 965 470
- EP-A- 1 514 714
- DE-A1- 10 131 397
- DE-A1- 19 709 605

## Beschreibung

Die vorliegende Erfindung betrifft ein Cabriolet mit zwei voneinander beabstandete Überrollbügeln und einem Windschott gemäß Oberbegriff des Patentanspruchs 1.

Ein solches Cabriolet ist aus der DE 101 31 397 A1 bekannt. Es besitzt ein Windschott mit einem Flächengebilde, das in einer Wirkstellung eine Wirkfläche als Windschutz zwischen zwei Überrollbügeln aufspannt. Ein Aufnahmeelement des Flächengebildes kann an dem einen Seitenbereich des einen Überrollbügels befestigt sein. Aus dem Aufnahmeelement wird dann das Flächengebilde in Richtung des Seitenbereichs des anderen Überrollbügels herausgezogen und mit seinem Ende daran befestigt. Beide Seitenbereiche der Überrollbügel sind einander zugekehrt, also innenliegend. Für das Abwickeln des Flächengebildes von dem Aufnahmeelement ist eine nicht näher beschriebene automatische Verstelleinrichtung vorgesehen.

Aus der DE 195 36 552 A1 ist ein Cabriolet mit zwei voneinander beabstandeten Überrollbügeln bekannt. Als Windschott dient ein flächiger Netzstoff, der am unteren und am oberen Netzrand durch einen Gurtstreifen verstärkt ist. Der am unteren Netzrand angebrachte Gurtstreifen ist unmittelbar hinter den beiden Überrollbügeln an der Karosserie befestigt. Für die Wirkstellung des Windschotts wird der Netzstoff händisch über die beiden Überrollbügel gezogen, so dass der am oberen Netzrand angebrachte Gurtstreifen gespannt an oberen Quertraversen der Überrollbügel anliegt. Dadurch wird über die von den Überrollbügeln gebildete Fläche und die Fläche zwischen den Überrollbügeln eine Wirkfläche des Windschotts aufgespannt.

Aus der DE 196 02 598 C1 ist ein Cabriolet bekannt, das einen einzigen Überrollbügel aufweist, in den ein Windschott integriert ist. Der Überrollbügel erstreckt sich über annähernd die gesamte Quererstreckung eines hinter einem Passagierbereich des Cabriolets angeordneten Fondraumbereichs. Im Bereich eines oberen Querstegs des Überrollbügels ist eine Rolloachse angebracht, auf der ein netzstoffartiges, aufrollbares Flächengebilde des Windschotts festgelegt ist. Die Rolloachse verläuft horizontal in Quererstreckung des Cabriolets. Um das Windschott in seine Wirkstellung zu bringen, wird das Flächengebilde von der Rolloachse abgerollt und überspannt dann in aufgespanntem Zustand den gesamten durch den Überrollbügel begrenzten Freiraum.

Es ist die Aufgabe der vorliegenden Erfindung, ein Platz sparendes Anordnen eines Windschotts in einem Cabriolet zu ermöglichen und außerdem den Windschutz zu verbessern.

Diese Aufgabe wird gemäß der technischen Lehre des Anspruchs 1 gelöst. Vorteilhafte Ausgestaltungen der Erfindung sind den abhängigen Ansprüchen zu entnehmen.

Bei dem erfindungsgemäßen Cabriolet ist ein Ende des Flächengebildes an einer verstellbaren Verstelleinrichtung befestigt. Die Verstelleinrichtung ist ferner so ausgestaltet und angeordnet, dass das an ihr befestigte Ende des Flächengebildes von einem Seitenbereich des einen Überrollbügels zu einem Seitenbereich des anderen Überrollbügels verfahrbar ist. Die beiden Seitenbereiche der beiden Überrollbügel sind dabei einander benachbart. Damit spannt das Flächengebilde in der Wirkstellung des Windschotts zwischen den beiden Überrollbügeln die Wirkfläche auf. Dazu ist insbesondere ein seitliches Ende des Flächengebildes an der verstellbaren Verstelleinrichtung befestigt. Mittels der Verstelleinrichtung kann das an ihr befestigte Ende des Flächengebildes insbesondere in Richtung der Quererstreckung des Cabriolets von dem einen Überrollbügel zu dem anderen Überrollbügel verfahren werden. Dadurch kann auf einfache Weise ein effizienter Windschutz in einem Passagierbereich des Cabriolets erzeugt werden. Die Verstelleinrichtung kann vorteilhafterweise, beispielsweise durch einen Passagier des Cabriolets insbesondere mittels Betätigen eines Schalters, automatisch das Windschott in seine Wirkstellung und/oder in eine Ruhestellung bringen. Gemäß der Erfindung ist wenigstens ein anderes Ende des Flächengebildes an der Verstelleinrichtung befestigt. Diese ist ferner so ausgestaltet und angeordnet, dass das an ihr befestigte wenigstens eine andere Ende des Flächengebildes von einem äußeren Seitenbereich wenigstens eines der Überrollbügel nach außen verfahrbar ist. Das andere Ende des Flächengebildes ist insbesondere nach außen in Richtung der Quererstreckung des Cabriolets verfahrbar, so dass das Flächengebilde ausgehend von dem äußeren Seitenbereich des wenigstens einen der Überrollbügel zusätzlich nach außen die Wirkfläche aufspannt. Diese zusätzliche seitliche Wirkfläche bildet somit einen äußeren, in Quererstreckung des Cabriolets verlaufenden Seitenteil des Windschotts. Dieser Seitenteil verläuft, in Quererstreckung des Cabriolets betrachtet, insbesondere von dem äußeren Seitenbereich des wenigstens einen der Überrollbügel bis annähernd zu einer Seitenscheibe des Cabriolets, die dem äußeren Seitenbereich benachbart ist. Vorteilhafterweise sind zwei Seitenteile realisiert, die ausgehend von den äußeren Seitenbereichen der beiden Überrollbügel annähernd bis zu in den beiden Längsseiten des Cabriolets vorhandenen Seitenscheiben verlaufen können. Das Flächengebilde kann dabei mehrere Flächengebildeteile aufweisen. Durch die zusätzliche Erstreckung der Wirkfläche des Windschotts von dem äußeren Seitenbereich wenigstens eines der Überrollbügel nach außen kann der Windschutz vorteilhafterweise weiter verbessert werden. Die so gebildete wenigstens eine seitliche Wirkfläche kann vorteilhafterweise unabhängig von der zwischen den beiden Überrollbügeln vorhandenen Wirkfläche angesteuert werden. Dies ermöglicht beim Öffnen und Schließen eines Verdecks des Cabriolets das insbesondere automatische Zurückverfahren der in ihrer Wirkstellung befindlichen wenigstens einen seitlichen Wirkfläche in ihre Ruhestellung. Zum Öffnen und Schließen des Verdecks eingesetzte Verdecklenker werden somit nicht behindert.

Vorzugsweise weist das Flächengebilde zwei Flächengebildeteile auf, wobei zwei Enden des einen Flächengebildeteiles an der Verstelleinrichtung befestigt sind. Diese ist dabei so ausgestaltet und angeordnet, dass das an ihr befestigte eine Ende des einen Flächengebildeteils von dem Seitenbereich des einen Überrollbügels zu dem Seitenbereich des anderen Überrollbügels nach innen und das an ihr befestigte andere Ende des einen Flächengebildeteils von dem äußeren Seitenbereich des einen Überrollbügels nach außen verfahrbar ist. Ein Ende des anderen Flächengebildeteiles ist ferner an dem anderen Überrollbügel und ein anderes Ende des anderen Flächengebildeteiles an der Verstelleinrichtung befestigt. Diese wiederum ist so ausgestaltet und angeordnet, dass das an ihr befestigte andere Ende des anderen Flächengebildeteils von dem äußeren Seitenbereich des anderen Überrollbügels nach außen verfahrbar ist. Mittels der beiden so ausgestalteten Flächengebildeteile lässt sich besonders komfortabel das Windschott mit zwei in Quererstreckung nach außen einstellbaren seitlichen Wirkflächen und der zwischen den beiden Überrollbügeln einstellbaren mittleren Wirkfläche realisieren. Die Flächengebildeteile überstrecken dabei die in Quererstreckung von den beiden Überrollbügeln aufgespannten Flächen.

In einer weiteren vorteilhaften Ausgestaltung weist die Verstelleinrichtung ein oder mehrere verstellbare Gestängeteile zum Befestigen des bzw. der Enden des Flächengebildes auf. Solche Gestängeteile gewährleisten ein stabiles Windschott und ein einfaches und zuverlässiges Verfahren der an ihnen befestigten Enden des Flächengebindes.

In einer besonders bevorzugten Ausgestaltung der Erfindung ist wenigstens ein verstellbares Gestängeteil verschwenkbar gelagert. Dies ermöglicht ein besonders einfaches und kostengünstiges Verfahren der an ihnen befestigten Enden des Flächengebindes, um das Windschott aus einer Ruhestellung in seine Wirkstellung, und umgekehrt, zu bringen. Das Verschwenken des wenigstens einen Gestängeteils ermöglicht es ferner, dass bei einem schräg verlaufenden Seitenbereich des Überrollbügels das Aufspannen der Wirkfläche des Windschotts an den Verlauf dieses schrägen Seitenbereichs angepasst ist. Das verschwenkbare Lagern des wenigstens einen Gestängeteils kann vorteilhafterweise dementsprechend ausgestaltet sein.

Besonders vorteilhaft ist das Ende des Flächengebildes, das von dem Seitenbereich des einen Überrollbügels zu dem Seitenbereich des anderen Überrollbügels verfahrbar ist, an einem verschwenkbaren Gestängeteil befestigt. Das Gestängeteil ist dabei in einer verschiebbaren Verschiebeeinrichtung verschwenkbar gelagert, die in einer Schiene geführt ist. Dies ermöglicht auf einfache Weise ein Aufspannen der Wirkfläche zwischen den beiden benachbarten Überrollbügeln, wobei gewährleistet ist, dass das geführte Verschieben ein zuverlässiges Ein- und Ausfahren des Windschotts sicherstellt.

Bevorzugt sind dabei in der Schiene zwei Anschläge zum Begrenzen des Verschiebens der Verschiebeeinrichtung angeordnet, wobei der eine der Anschläge dem Seitenbereich des einen Überrollbügels und der andere der Anschläge dem Seitenbereich des anderen Überrollbügels zugeordnet ist. Die Positionen der Anschläge sind vorteilhafterweise an den Verlauf von schrägen Seitenbereichen der beiden Überrollbügel angepasst. Nach dem Begrenzen des Verschiebens durch die Anschläge wird der Gestängeteil verschwenkt und nimmt dann vorzugsweise eine solche Neigung oder Schräge gegenüber der vertikalen Richtung ein, die mit den Schrägen der Seitenbereiche der Überrollbügel zumindest annähernd übereinstimmt. Dies gewährleistet sowohl in Wirkstellung als auch in Ruhestellung des Windschotts eine gutes Aussehen des Cabriolets und insbesondere einen optimalen Windschutz, da ein Spalt zwischen dem an dem Gestängeteil befestigten Ende des Flächengebildes und den Überrollbügeln vermieden wird.

Besonders bevorzugt weist die Verstelleinrichtung zum Verfahren des oder der Enden des Flächengebildes ein bzw. mehrere Schubstangen auf. Schubstangen gewährleisten ein zuverlässiges und stabiles Verfahren des Flächengebildes.

Besonders vorteilhaft sind die ein oder mehreren Schubstangen in ein bzw. mehreren Schienen geführt. Dadurch wird ein besonders zuverlässiges Verfahren des Flächengebildes ermöglicht. Beispielsweise kann ein Verkanten der Schubstangen auf einfache Weise vermieden werden.

Bevorzugt sind die ein oder mehreren verstellbaren Gestängeteile mit den ein bzw. mehreren Schubstangen verbunden. Mittels der Schubstangen lässt sich ein besonders stabiles und sicheres Verfahren der Gestängeteile und der an ihnen befestigten Enden des Flächengebildes erreichen.

Besonders bevorzugt weist der verschwenkbare Gestängeteil, an dem das Ende des Flächengebildes befestigt ist, das von dem Seitenbereich des einen Überrollbügels zu dem Seitenbereich des anderen Überrollbügels verfahrbar ist, ein in Richtung der Längserstreckung des verschwenkbaren Gestängeteils ausgebildetes Langloch auf. In diesem Langloch ist die mit dem verschwenkbaren Gestängeteil verbundene Schubstange geführt. Dabei ist die verschwenkbare Lagerung des Gestängeteils in vertikaler Richtung vorteilhafterweise von der Schubstange beabstandet. Das Führen der Schubstange in dem Langloch gewährleistet das Verfahren des Gestängeteils und ebenso ein freies Verschwenken des Gestängeteils, bei dem Orte des Gestängeteils, die von seinem Lagerungspunkt entfernt sind, eine bogenförmige Verschwenkbewegung ausführen. Diese bogenförmige Verschwenkbewegung wird durch das Langloch zugelassen.

Besonders vorteilhaft sind die Schubstangen mittels eines Antriebs verschiebbar. Dieser Antrieb kann beispielsweise ein elektrischer, hydraulischer oder pneumatischer Antrieb sein. Dadurch kann das Windschott bequem ein- und ausgefahren werden.

Bevorzugt ist ein sich in Querrichtung des Cabriolets erstreckender Querträger vorhanden, in dem die Überrollbügel gelagert und die Verstelleinrichtung zumindest teilweise angeordnet ist. Durch diesen Querträger ist eine stabile Lagerung der Überrollbügel gegeben und die Verstelleinrichtung sicher vor schädlichen äußeren Einflüssen geschützt. Insbesondere können die Schienen und ggf. in ihnen geführte Schubstangen in dem Querträger angeordnet sein. Das problemlose und geschützte Verschieben der Schubstangen ist besonders wichtig, damit das Windschott leichtgängig und ohne jegliche Behinderung durch Schmutz oder dergleichen in seine Wirkstellung und aus dieser hinaus verfahren werden kann.

Bevorzugt weist das Flächengebilde einen insbesondere netzförmigen Stoff auf. Der netzförmige Stoff ist vorteilhafterweise elastisch, so dass er beim Verfahren des Endes des Flächengebildes in den ausgefahrenen Zustand des Windschotts dehnbar ist. In eingefahrenem Zustand des Windschotts, wenn sich dieses in seiner Ruhestellung befindet, ist der netzförmige Stoff nicht oder nur leicht gedehnt und wirft vorteilhafterweise keine Falten.

Besonders bevorzugt weisen die Überrollbügel zum Passagierraum hin eine Polsterung auf. Zwischen dem Überrollbügel und der Polsterung sind Aussparungen zumindest für Teile der Verstelleinrichtung und/oder des Flächengebildes vorgesehen. In diese Aussparungen können die Verstelleinrichtung und/oder das Flächengebilde einfahren, so dass sie in ihnen versenkt sind. Dies schützt die Verstelleinrichtung und/oder das Flächengebilde vor schädlichen äußeren Einflüssen. Ferner ist dadurch eine besonders gute Optik des Cabriolets gewährleistet. Die Aussparungen können insbesondere schlitzförmig sein und gegebenenfalls in ihren Ausmaßen und Formen an in der Verstelleinrichtung vorhandene Gestängeteile angepasst sein.

Die Überrollbügel sind bevorzugt feststehende Überrollbügel. In diesen kann das Windschott mitsamt der Verstelleinrichtung besonders effizient eingesetzt werden.

Weitere Vorteile und vorteilhafte Ausgestaltungen der Erfindung ergeben sich aus der folgenden Beschreibung von bevorzugten Beispielen und Ausführungsbeispielen unter Bezugnahme auf die beigefügten Zeichnungen. Es zeigen:
- Fig. 1A bis 1C: eine schematische Darstellung eines erfindungsgemäßen Cabriolets mit zwei voneinander beabstandeten Überrollbügeln und mit einem Windschott in einer Ruhestellung, einer Zwischenstellung und einer Wirkstellung,
- Fig. 2: eine schematische Darstellung der Überrollbügel und des Windschotts mitsamt einer Verstelleinrichtung, die zum Verfahren eines Flächengebildes des Windschotts dient,
- Fig. 3A bis 3C: schematische Schnittdarstellungen eines an drei verschiedenen Positionen geschnittenen Querträgers, in dem die Überrollbügel gelagert und ein Teil der Verstelleinrichtung angeordnet ist,
- Fig. 4A bis 4C: schematische Höhenschnitt - Darstellungen durch die Überrollbügel und das in seiner Ruhestellung, in seiner Zwischenstellung und in seiner vollständigen Wirkstellung befindliche Windschott,
- Fig. 5: eine weitere schematische Darstellung der Überrollbügel und des Windschotts nach Fig. 2 mit einer zusätzlichen Abdeckung zur Zugfreihaltung und
- Fig. 6: eine weitere schematische Darstellung der Überrollbügel und des Windschotts mitsamt einer weiteren Verstelleinrichtung, die zum Verfahren des Flächengebildes des Windschotts schwenkbar gelagerte Gestängeteile aufweist.

Im Folgenden werden für gleiche oder gleichwirkende Elemente gleiche Bezugszeichen verwendet.

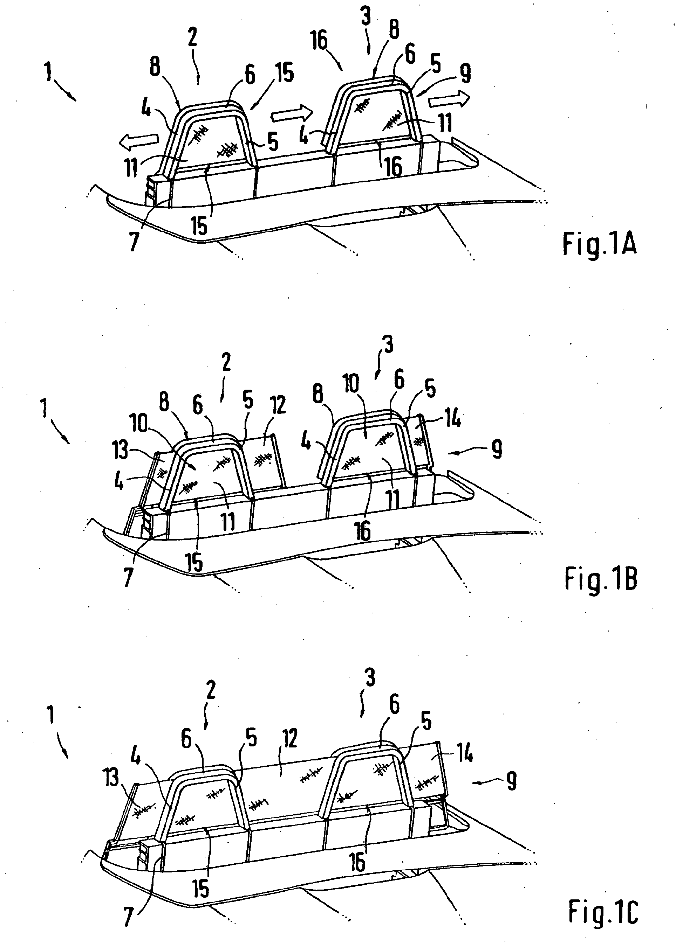

Die Fig. 1A bis 1C zeigen schematische Darstellungen eines erfindungsgemäßen Cabriolets 1 mit zwei voneinander beabstandeten Überrollbügeln 2 und 3. Die Fig. 1A bis 1C zeigen Ansichten von hinten auf die Überrollbügel 2, 3. Das Cabriolet 1 ist hier ein zweisitziges Cabriolet, ein so genannter Roadster. Die Überrollbügel 2, 3 sind hier feststehende Überrollbügel, die in Cabrioletlängsrichtung hinter zwei in einem Passagierraum vorhandenen Sitzen angebracht sind, wobei den beiden Sitzen jeweils einer der Überrollbügel 2, 3 zugeordnet ist. Jeder der Überrollbügel 2, 3 weist zwei voneinander beabstandete, in die Höhe weisende Seitenholme 4, 5 auf, die durch einen Quersteg 6, vorteilhafterweise einstückig, miteinander verbunden sind. Die Überrollbügel 2, 3 sind in einem Querträger 7 befestigt, der sich in Quererstreckung des Cabriolets 1 erstreckt, und nach vorne, zum Passagierraum hin, mit einer Polsterung 8 versehen. Der Querträger 7 ist vorteilhafterweise aus einem Aluminium-Strangpressprofil gefertigt.

Das Cabriolet 1 weist ein Windschott 9 auf, das hier in die beiden Überrollbügel 2, 3 integriert ist. In der Fig. 1A ist das Windschott 9 in einer Ruhestellung, in der Fig. 1B in einer von mehreren möglichen Zwischenstellungen und in der Fig. 1C in einer Wirkstellung dargestellt. In seiner Ruhestellung befindet sich das Windschott 9 in einem eingefahrenen Zustand, in dem es keinen oder einen nur sehr geringen Windschutz für den Passagierraum des Cabriolets 1 bietet. In seiner Wirkstellung bietet das Windschott 9 einen sehr guten Windschutz für den Passagierraum. In den zwischen der Ruhe- und der Wirkstellung befindlichen Zwischenstellungen bietet das Windschott 9 einen Windschutz, der in seinem Grad zwischen demjenigen der Ruhestellung und demjenigen der Wirkstellung liegt. Das Windschott 9 hat ein Flächengebilde 10, das hier aus einem elastischen, netzförmigen Stoff gebildet ist. Das Flächengebilde 10 kann Wirkflächen 11, 12, 13 und 14 aufspannen, die den Windschutz gewährleisten. Dazu erstrecken sich die Wirkflächen 11 bis 14 des Windschotts 9 in Quer- und Höhenerstreckung des Cabriolets 1. Das Flächengebilde 10 weist hier zwei Flächengebildeteile 15 und 16 auf, von denen das Flächengebildeteil 15 dem Überrollbügel 2 und das Flächengebildeteil 16 dem Überrollbügel 3 zugeordnet ist. Die Wirkfläche 11 deckt die von den Überrollbügeln 2, 3 zwischen ihren Seitenholmen 4, 5, ihrem Quersteg 6 und annähernd der Oberkante des Querträgers 7 gebildeten Flächen ab. Die Wirkfläche 11 bleibt hier in allen verschiedenen Stellungen des Windschotts 9 aufgespannt. Dabei liegen die Wirkflächen 11 in den Überrollbügeln 2, 3 hinter den Sitzen zugeordneten Kopfstützen des Cabriolets 1. Die Wirkflächen 11 behindern die Sicht nach hinten nicht. In der in der Fig. 1C dargestellten Wirkstellung des Windschotts 9 ist die mittlere Wirkfläche 12 dargestellt, die zwischen den beiden Überrollbügeln 2, 3, d. h. zwischen dem inneren Seitenholm 5 des Überrollbügels 2 und dem inneren Seitenholm 4 des Überrollbügels 3 aufgespannt ist. In der Wirkstellung sind ebenfalls die seitliche Wirkfläche 13, die sich von dem äußeren Seitenholm 4 des Überrollbügels 2 nach außen bis annähernd zu einer Seitenscheibe des Cabriolets 1 erstreckt, und die seitliche Wirkfläche 14 aufgespannt, die sich von dem äußeren Seitenholm 5 des Überrollbügels 3 nach außen bis annähernd zu einer anderen Seitenscheibe erstreckt. Dadurch lässt sich ein Windschott 9 realisieren, das sich in seiner Wirkstellung annähernd zwischen zwei an gegenüber liegenden Seiten des Cabriolets 1 befindlichen Seitenscheiben erstreckt. In der in der Fig. 1B dargestellten Zwischenstellung des Windschotts 9 sind die Wirkflächen 12 bis 14 nicht vollständig, sondern jeweils nur teilweise, aufgespannt. Vorzugsweise lassen sich beliebige Zwischenstellungen stufenlos einstellen. Es ist hier vorteilhafterweise gewährleistet, dass die Wirkflächen 12 bis 14 unabhängig voneinander aufgespannt werden können. Insbesondere ist es möglich, dass die beiden seitlichen Wirkflächen 13, 14 unabhängig von der mittleren Wirkfläche 12 eingefahren, d. h. nicht aufgespannt, sein können, um ein Verdeck des Cabriolets 1 zu öffnen oder zu schließen. Das Windschott 9 ist vorzugsweise automatisch bedienbar, so dass es die verschiedenen Stellungen auf Wunsch, z. B. durch Betätigen einer Taste oder eines Knopfes, einnehmen kann. Das Verfahren des Windschotts 9 in seine verschiedenen Stellungen ist insbesondere auch während der Fahrt des Cabriolets 1 möglich.

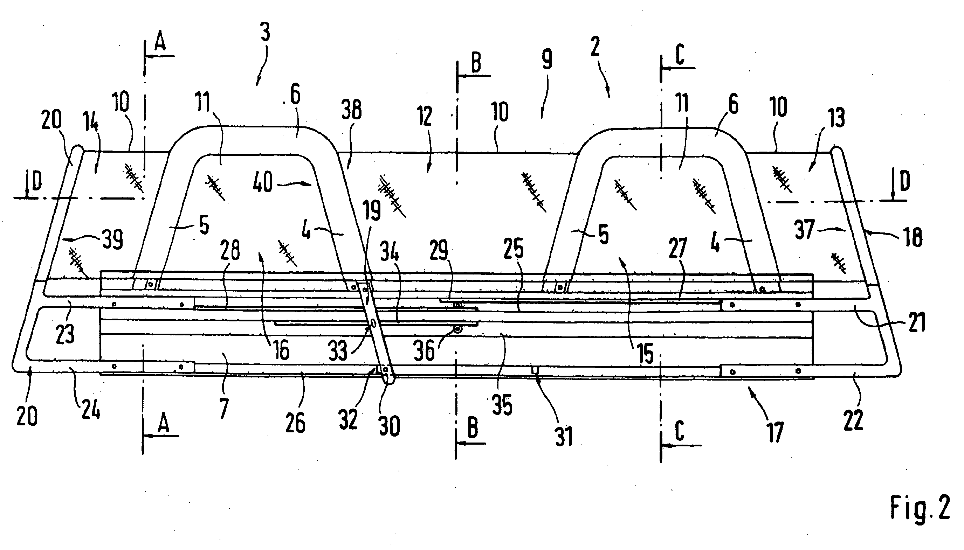

Fig. 2 zeigt eine schematische Darstellung der Überrollbügel 2, 3 und des Windschotts 9 mitsamt einer Verstelleinrichtung 17, die zum Verfahren des Flächengebildes 10 des Windschotts 9 in seine verschiedenen Stellungen dient. Fig. 2 zeigt eine Ansicht von vorne auf die Überrollbügel 2, 3 und das Windschott 9. Mit der Verstelleinrichtung 17 lassen sich die Größen der von den Flächengebildeteilen 15, 16 aufgespannten Wirkflächen 12 bis 14 verändern. Die Verstelleinrichtung 17 weist drei seitlich in Quererstreckung des Cabriolets 1 verstellbare Gestängeteile 18, 19 und 20 auf. Das Gestängeteil 18 ist dem Seitenholm 4 des Überrollbügels 2, das Gestängeteil 19 dem Seitenholm 5 des Überrollbügels 2 und das Gestängeteil 20 dem Seitenholm 5 des Überrollbügels 3 zugeordnet. Die Gestängeteile 18 bis 20 verlaufen in Höhenerstreckung des Cabriolets 1. Das Gestängeteil 18 hat eine Neigung gegenüber einer Vertikalen, die mit einer Neigung des Seitenholms 4 des Überrollbügels 2 gegenüber der Vertikalen übereinstimmt. Das Gestängeteil 20 hat eine Neigung gegenüber der Vertikalen, die mit einer Neigung des Seitenholms 5 des Überrollbügels 3 übereinstimmt. Eine Neigung des Gestängeteils 19 gegenüber der Vertikalen ist mit einem geeigneten Mechanismus veränderlich und kann an die Neigung des Seitenholms 5 des Überrollbügels 2 oder die Neigung des Seitenholms 4 des Überrollbügels 2 angepasst werden. Das Gestängeteil 18 kann ausgehend von dem Seitenholm 4 des Überrollbügels 2 in Quererstreckung seitlich nach außen, und umgekehrt, verstellt werden. Das Gestängeteil 19 kann ausgehend von dem Seitenholm 5 des Überrollbügels 2 zu dem Seitenholm 4 des Überrollbügels 2, und umgekehrt, verstellt werden. Das Gestängeteil 20 kann ausgehend von dem Seitenholm 5 des Überrollbügels 3 in Quererstreckung seitlich nach außen, und umgekehrt, verstellt werden.

Das Gestängeteil 18 weist zwei, in vertikaler Richtung voneinander beabstandete, sich in seinem unteren Drittel horizontal nach innen erstreckende Verstrebungen 21 und 22 auf. Das Gestängeteil 20 weist zwei, in vertikaler Richtung voneinander beabstandete, sich in seinem unteren Drittel horizontal nach innen erstreckende Verstrebungen 23 und 24 auf. Die Gestängeteile 18 und 20 sind mittels ihrer Verstrebungen 21, 22 bzw. 23, 24 in dem Querträger 7 verschiebbar gelagert. Dazu weist der Querträger 7 eine sich horizontal erstreckende obere Schiene 25 und eine sich horizontal erstreckende untere Schiene 26 auf. Die Verstrebungen 21 und 23 sind in der oberen Schiene 25 und die Verstrebungen 22 und 24 in der unteren Schiene 26 gelagert. Zum horizontalen Verschieben der Gestängestange 18 ist deren Verstrebung 21 an einer Schubstange 27 befestigt, die in der oberen Schiene 25 angeordnet ist. Zum horizontalen Verschieben der Gestängestange 20 ist deren Verstrebung 23 an einer Schubstange 28 befestigt, die ebenfalls in der oberen Schiene 25 angeordnet ist. Die beiden Schubstangen 27 und 28 sind in der oberen Schiene 25 vertikal gegeneinander versetzt an den Verstrebungen 21 bzw. 23 befestigt. Die Schubstangen 27, 28 haben solche Längen, dass sie einander sowohl in eingefahrenem als auch in ausgefahrenem Zustand der Gestängeteile 18, 20 in horizontaler Richtung teilweise überlappen. Die Schubstange 27 ist als Zahnstange ausgestaltet und weist unten, in Richtung der Schubstange 28 eine Vielzahl von in horizontaler Richtung nebeneinander angeordneten Zähnen auf. Die Schubstange 28 ist ebenfalls als Zahnstange ausgestaltet und weist oben, in Richtung der Schubstange 27 eine Vielzahl von in horizontaler Richtung nebeneinander angeordneten Zähnen auf. Zwischen den sich überlappenden Bereichen der Schubstangen 27, 28 befindet sich ein Zahnrad 29, das in die Zähne der Schubstangen 27, 28 eingreift. Das Zahnrad 29 dient als Antrieb für die Schubstangen 27, 28. Mit dieser Anordnung werden die Schubstangen 27, 28 gleichzeitig und in gleicher Weise nach außen verschoben, wobei die Verschieberichtungen einander entgegengesetzt sind.

In der unteren Schiene 26 des Querträgers 7 ist zwischen den beiden Verstrebungen 22 und 24 ein horizontal verschiebbarer Gleitstein 30 angeordnet. An dem Gleitstein 30 ist das Gestängeteil 19 in seinem unteren Endbereich verschwenkbar gelagert. In der unteren Schiene 26 sind ferner zwei Anschläge 31 und 32 angeordnet, die die Verschiebebewegung des Gleitsteins 30 begrenzen. Der Anschlag 31 ist dem Seitenholm 5 des Überrollbügels 2 zugeordnet und in der Verlängerung der Längserstreckung des Seitenholms 5 des Überrollbügels 2 nach unten in der unteren Schiene 26 platziert. Der Anschlag 32 ist dem Seitenholm 4 des Überrollbügels 3 zugeordnet und in der Verlängerung der Längserstreckung des Seitenholms 4 des Überrollbügels 3 nach unten in der unteren Schiene 26 platziert. Das Gestängeteil 19 weist ein sich in seine Längserstreckung erstreckendes Langloch 33 auf, in dem eine weitere Schubstange 34 gelagert ist. Die Schubstange 34 ist ebenfalls als Zahnstange ausgebildet und in einer mittleren Schiene 35 des Querträgers 7 gelagert. Die mittlere Schiene 35 befindet sich in vertikaler Richtung zwischen der oberen Schiene 25 und der unteren Schiene 26. In die Zähne der Schubstange 34 greift ein Zahnrad 36 ein, das als Antrieb zum horizontalen Verschieben der Schubstange 34, und damit des Gestängeteils 19, dient. Die Zahnräder 29 und 36 sind in der Mitte der Quererstreckung des Querträgers 7 angeordnet.

Wie bereits oben gesagt, kann die Neigung des Gestängeteils 19 gegenüber der Vertikalen an die Neigung des Seitenholms 5 des Überrollbügels 2 oder die Neigung des Seitenholms 4 des Überrollbügels 2 angepasst werden. Dies wird dadurch erreicht, dass das Gestängeteil 19 verschwenkbar an dem Gleitstein 30 gelagert ist und die Verschiebebewegung des Gleitsteins 30 durch die beiden Anschläge 31 und 32 begrenzt ist. Es wird nun das Verstellen des Gestängeteils 19 beschrieben. Ausgehend von dem eingefahrenen Zustand des Gestängeteils 19, in dem es sich an dem Seitenholm 5 des Überrollbügels 2 befindet und seine Neigung derjenigen dieses Seitenholms 5 entspricht, wird das Zahnrad 36 angetrieben und die Schubstange 34 translatorisch in Richtung des Überrollbügels 3 verschoben. Diese Bewegung wird über die Lagerung der Schubstange 34 in dem Langloch 33 auf das Gestängeteil 19 und von diesem auf den Gleitstein 30 übertragen. In dem Moment, in dem der Gleitstein 30 an dem Anschlag 32 anschlägt, wird die translatorische Verschiebebewegung des Gestängeteils 19 gestoppt und das weitere Verschieben der Schubstange 34 führt zu einem Verschwenken oder Drehen des Gestängeteils 19 in Richtung des Seitenholms 4 des Überrollbügels 3. Durch dieses Verschwenken ändert sich die Neigung des Gestängeteils 19 so, dass sie mit derjenigen des Seitenholms 4 des Überrollbügels 3 übereinstimmt. Das Gestängeteil 19 ist dann in seinem ausgefahrenen Zustand. Entsprechendes gilt für das Verfahren des Gestängeteils 19 von dem Überrollbügel 3 zu dem Überrollbügel 2, d. h. von seinem ausgefahrenen in seinen eingefahrenen Zustand. In diesem Fall wird die Schubstange 34 translatorisch in die entgegengesetzte Richtung, d. h. von dem Seitenholm 4 des Überrollbügels 3 zu dem Seitenholm 5 des Überrollbügels 2, verschoben. Diese Bewegung wird über die Lagerung der Schubstange 34 in dem Langloch 33 auf das Gestängeteil 19 und von diesem auf den Gleitstein 30 übertragen. In dem Moment, in dem der Gleitstein 30 an dem Anschlag 31 anschlägt, wird die translatorische Verschiebebewegung des Gestängeteils 19 gestoppt und das weitere Verschieben der Schubstange 34 führt zu einem Verschwenken des Gestängeteils 19 in Richtung des Seitenholms 5 des Überrollbügels 2. Durch dieses Verschwenken ändert sich die Neigung des Gestängeteils 19 so, dass sie mit derjenigen des Seitenholms 5 des Überrollbügels 2 übereinstimmt. Der Gestängeteil 19 befindet sich dann wieder in seinem eingefahrenen Zustand.

Das Verfahren der Gestängeteile 18 bis 20 führt zum Aufspannen der Wirkflächen 12 bis 14 des Flächengebildes 10 des Windschotts 9. Dazu sind seitliche Enden der Flächengebildeteile 15, 16 an den Gestängeteilen 18 bis 20 befestigt. Im vorliegenden Ausführungsbeispiel sind, jeweils in Quererstreckung des Cabriolets 1 betrachtet, ein äußeres Ende 37 des Flächengebildeteils 15 mit dem Gestängeteil 18, ein inneres Ende 38 des Flächengebildeteils 15 mit dem Gestängeteil 19 und ein äußeres Ende 39 des Flächengebildeteils 16 mit dem Gestängeteil 20 verbunden. Ein inneres Ende 40 des Flächengebildeteils 16 ist mit dem Seitenholm 4 des Überrollbügels 3 verbunden. Dadurch, dass die Flächengebildeteile 15, 16 elastische Stoffe zum Aufspannen der Wirkflächen 11 bis 14 aufweisen, werden diese elastischen Stoffe beim Verfahren der Gestängeteile 18 bis 20 in ihre ausgefahrenen Zustände, in denen die Wirkflächen 12 bis 14 aufgespannt sind, gedehnt. Die Gestängeteile 18 bis 20 werden gegen die Spannung der Stoffe verstellt. In den eingefahrenen Zuständen der Gestängeteile 18 bis 20 ziehen sich die Stoffe wieder zusammen. Dies erfolgt vorteilhafterweise so, dass die Stoffe sowohl im gedehnten als auch im zusammen gezogenen Zustand keine Falten werfen. An Stelle des elastischen Stoffes können die Wirkflächen 11 bis 14 auch durch andere Materialen, wie z. B. Glas, etc., aufgespannt werden. Des Weiteren kann ein Stoff eingesetzt werden, der nicht oder nur wenig elastisch ist. Dieser kann mittels Rollos oder ähnlichen Einrichtungen, die beispielsweise in einem Zwischenraum zwischen den Polsterungen 8 und den Rahmen der Überrollbügel 2, 3 angeordnet sind, auf- und abgewickelt werden.

In der Fig. 2 sind mehrere Schnitte angedeutet, die in nachfolgenden Figuren näher dargestellt sind. Ein Schnitt A-A verläuft vertikal am äußeren Ende des Überrollbügels 3. Ein Schnitt B-B verläuft vertikal in der Mitte der in der Fig. 2 gezeigten Anordnung. Ein Schnitt C-C verläuft vertikal durch die Mitte des Überrollbügels 2 und ein Höhenschnitt D-D verläuft horizontal durch die beiden Überrollbügel 2, 3.

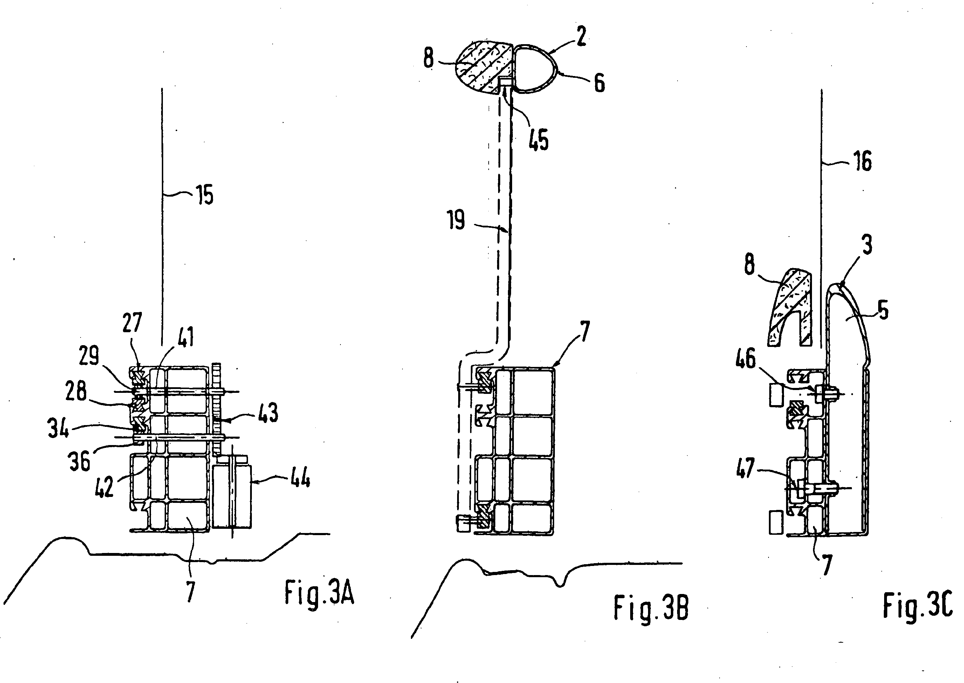

Fig. 3A zeigt eine schematische Darstellung des Querträgers 7 und des die Wirkfläche 12 aufspannenden Flächengebildeteils 15 gemäß dem in der Fig. 2 dargestellten Schnitt B-B. Die Fig. 3A zeigt eine Querschnittdarstellung der als Zahnstangen ausgestalteten Schubstangen 27, 28 und 34 sowie der Zahnräder 29 und 36. Das Zahnrad 29 sitzt auf einer Achse 41 und das Zahnrad 36 auf einer Achse 42. Die beiden Achsen 41, 42 sind nach hinten durch den Querträger 7 durchgeführt, so dass ein Getriebe 43 an den beiden Achsen 41, 42 angreifen kann. Das Getriebe 43 ist mit einem Antriebsmotor 44 verbunden, mit dem ein Drehen der Zahnräder 29, 36 und ein Verschieben der Schubstangen 27, 28, 34 bewirkt werden kann. Der Antriebsmotor 44 kann beispielsweise ein Elektromotor sein. Die Zahnräder 29 und 36 werden hier gemeinsam über das Getriebe 43 in einem bestimmten Übersetzungsverhältnis von dem Antriebsmotor 44 angetrieben. Es ist auch möglich, die Zahnräder 29 und 36 unabhängig voneinander, beispielsweise mittels zwei Antriebsmotoren, anzutreiben. Ebenso ist es möglich, einen anderen Antriebsmechanismus zu verwenden. Die Zahnräder 29, 36 können auch händisch, beispielsweise mit einer Kurbel oder einem Drehhebel, gedreht werden.

Fig. 3B zeigt eine schematische Darstellung des Querträgers 7 entlang der Mitte des Überrollbügels 2 gemäß dem in der Fig. 2 dargestellten Schnitt C-C. Die Fig. 3B zeigt Querschnitte des Rahmens des Querstegs 6 des Überrollbügels 2 und der an ihm angebrachten Polsterung 8. Die Polsterung 8 ist in einem oberen Bereich des Überrollbügels 2 und an seinem unteren Ende, beispielsweise mit Schrauben oder Clipsen, an dem Rahmen des Überrollbügels 2 befestigt. Zur Verdeutlichung der Anordnung und deren Funktionalität ist gestrichelt das nicht in der eigentlichen Schnittposition C-C befindliche, sondern weiter in Richtung des Seitenholms 5 des Überrollbügels 2 verschobene, Gestängeteil 19 dargestellt. Am unteren, dem Rahmen des Überrollbügels 2 benachbarten Ende der Polsterung 8 weist diese eine Aussparung 45 auf, in der das Gestängeteil 19 und der an ihm befestigte Stoff des Flächengebildeteils 15 verlaufen können. Die Aussparung 45 ist hier schlitzförmig ausgebildet und durchgängig in der Polsterung 8 sowohl des Überrollbügels 2 als auch des Überrollbügels 3 vorhanden. Die Aussparung 45 ist daher insbesondere auch zwischen der Polsterung 8 und den Seitenholmen 4, 5 vorhanden. Die Gestängeteile 18 bis 20 können in die Aussparung 45 einfahren, um somit in ihren eingefahrenen Zuständen, und das Gestängeteil 19 ebenfalls in seinem ausgefahrenen Zustand, vorteilhafterweise vollständig in der Aussparung 45 zwischen Polsterung 8 und den Seitenholmen 4, 5 des Überrollbügels 2, aber ebenso des Überrollbügels 3, verschwinden zu können. Die Gestängeteile 18 bis 20 können somit in der schlitzförmigen Aussparung 45 untergebracht sein. Die schlitzförmige Aussparung 45 ermöglicht ferner das Bewegen des elastischen Stoffes des Flächengebildes 10.

Fig. 3C zeigt eine schematische Darstellung des Querträgers 7 und des Flächengebildeteils 16 gemäß dem in der Fig. 2 dargestellten Schnitt A-A. Die Fig. 3C zeigt den mittels Schrauben 46 und 47 an dem Querträger 7 befestigten Überrollbügel 3. Ferner ist die Aussparung 45 zwischen der Polsterung 8 und dem Seitenholm 5 des Überrollbügels 3 dargestellt. In der Aussparung 45 befindet sich das untere Ende des Flächengebildeteils 16.

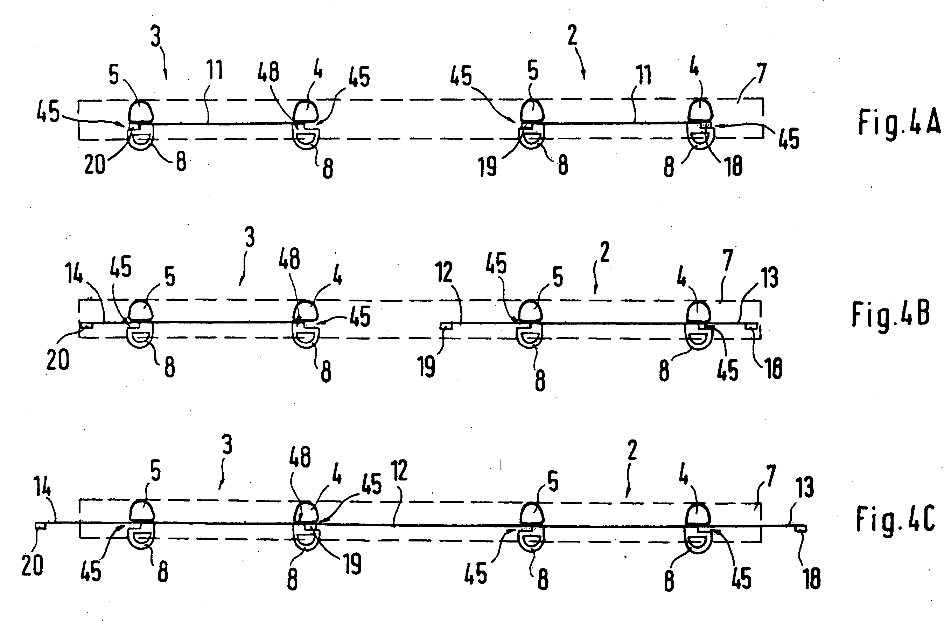

Die Fig. 4A bis 4C zeigen schematische Höhenschnitt - Darstellungen durch die Überrollbügel 2, 3 und das in seinen verschiedenen Stellungen befindliche Windschott 9 gemäß dem in der Fig. 2 dargestellten Schnitt D-D. Die Fig. 4A bis 4C zeigen deutlich eine Position 48, an der das innere Ende 40 des Flächengebildeteils 16 an dem Seitenholm 4 des Überrollbügels 3 befestigt ist. Fig. 4A zeigt das Windschott 9 in seiner Ruhestellung. Die Stoffe der Flächengebildeteile 15, 16 sind in ihren zusammen gezogenen Zuständen. Die Gestängeteile 18 bis 20 befinden sich in ihren eingefahrenen Zuständen. Zwischen den Rahmen der Überrollbügel 2, 3 und den Polsterungen 8 sind die Aussparungen 45 der Polsterungen 8 zu sehen, in die die Gestängeteile 18 bis 20 eingefahren sind. Zwischen den Seitenholmen 4, 5 und den Polsterungen 8 sind die Aussparungen 45 durchgängig, wobei die Schlitze der Aussparungen 45 an diesen Stellen unterschiedlich breit sind. Die schlitzförmigen Aussparungen 45 zum Einfahren der Gestängeteile 18 bis 20 sind breiter, als diejenigen zum Durchführen des Stoffes der Flächengebinde 15, 16. Fig. 4b zeigt das Windschott 9 in seiner Zwischenstellung. Die Gestängeteile 18 bis 20 sind aus den Aussparungen 45 ausgefahren, spannen die Wirkflächen 12 bis 14 allerdings nur teilweise auf. Fig. 4C zeigt das Windschott 9 in seiner vollständigen Wirkstellung. Die Gestängeteile 18 bis 20 sind vollständig ausgefahren und spannen die Wirkflächen 12 bis 14 vollständig auf.

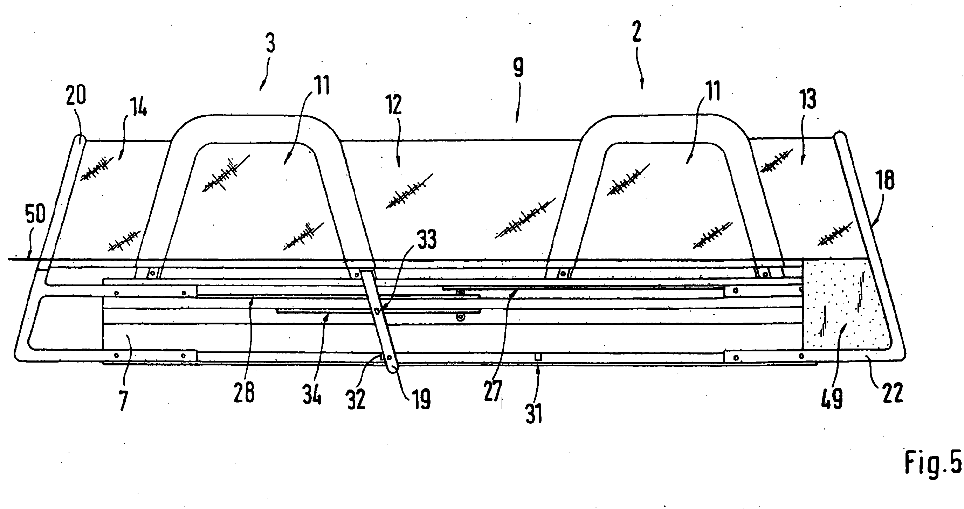

Fig. 5 zeigt eine weitere schematische Darstellung der Überrollbügel 2, 3 und des Windschotts 9 nach Fig. 2. Zusätzlich weist das Windschott 9 eine Blende oder Abdeckung 49 zur Zugfreihaltung des Passagierraums auf. Diese Abdeckung 49 deckt einen winddurchlässigen Bereich des Windschotts 9 ab, der zwischen dem unteren Teil des Gestängeteils 18, der Verstrebung 22, der äußeren seitlichen Begrenzung des Querträgers 7 und einer Oberkante 50 einer Verkleidung gebildet ist. Ohne die Abdeckung 49 würde dieser Bereich bei ausgefahrenem Gestängeteil 18 gegebenenfalls einen Windstrom in den Passagierraum zulassen. Dies wird zuverlässig durch die Abdeckung 49 verhindert. Neben der Abdeckung 49 kann das Windschott 9 eine weitere Abdeckung zur Zugfreihaltung aufweisen, die analog an der anderen Außenseite des Windschotts 9 an dem Gestängeteil 20 angebracht ist.

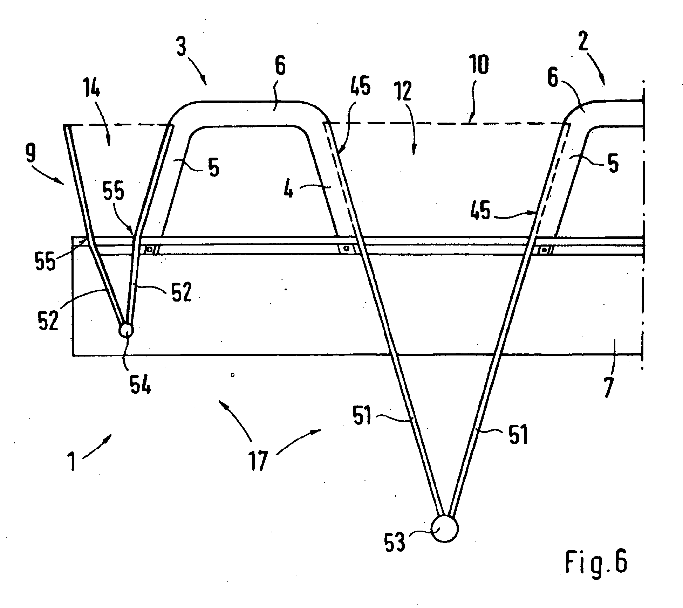

Fig. 6 zeigt eine weitere schematische Darstellung der Überrollbügel 2, 3 und des Windschotts 9. In der Ausführung gemäß der Fig. 6 hat die Verstelleinrichtung 17 zum Verfahren des Flächengebildes 10 des Windschotts 9 in seine verschiedenen Stellungen einen veränderten Aufbau. Im vorliegenden Ausführungsbeispiel weist die Verstelleinrichtung 17 zum Verfahren des Flächengebildes 10 an Stelle der verschiebbaren Gestängeteile 18 bis 20 gemäß der vorhergehenden Ausführungsbeispiele nunmehr ausschließlich schwenkbar gelagerte Gestängeteile auf. In der Fig. 6 sind ein zwischen den beiden Überrollbügeln 2, 3 angeordnetes mittleres Gestängeteil 51 und ein seitliches Gestängeteil 52 dargestellt. Das mittlere Gestängeteil 51 ist unterhalb des Querträgers 7 in einem Drehpunkt 53 gelagert und dient zum Aufspannen der Wirkfläche 12 zwischen den beiden Überrollbügeln 2, 3. Die Fig. 6 zeigt das mittlere Gestängeteil 51 in seinem eingefahrenen Zustand, in dem es nach rechts verschwenkt ist und sich teilweise in der Aussparung 45 des Seitenholms 5 des Überrollbügels 2 befindet. Die Fig. 6 zeigt das mittlere Gestängeteil 51 ebenfalls in seinem ausgefahrenen Zustand, in dem es die Wirkfläche 12 aufspannt und nach links verschwenkt ist. Das Gestängeteil 51 befindet sich dann teilweise in der Aussparung 45 des Seitenholms 4 des Überrollbügels 3. Die Länge des Gestängeteils 51 und die Position des Drehpunkts 53 sind so gewählt, dass die Neigung des Gestängeteils 51 in dem ein- und ausgefahrenen Zustand mit den Neigungen der Seitenholme 4, 5 der Überrollbügel 2, 3 übereinstimmt. Das seitliche Gestängeteil 52 ist in dem Querträger 7 in einem Drehpunkt 54 gelagert und dient ausgehend von dem Seitenholm 5 des Überrollbügels 3 zum Aufspannen der seitlichen Wirkfläche 14. Die Fig. 6 zeigt das seitliche Gestängeteil 52 in seinem eingefahrenen Zustand, in dem es nach rechts verschwenkt ist. Die Fig. 6 zeigt das seitliche Gestängeteil 52 ebenfalls in seinem ausgefahrenen Zustand, in dem es die Wirkfläche 12 aufspannt und nach links verschwenkt ist. Der längliche Verlauf des Gestängeteils 52 weist einen Knick 55 in Richtung des Seitenholms 5 des Überrollbügels 3 auf. Die Länge des Gestängeteils 52, die Position des Knicks 55 und die Position des Drehpunkts 54 sind so gewählt, dass die Neigung des Gestängeteils 52 mit der Neigung des Seitenholms 5 übereinstimmt. Die Verstelleinrichtung 17 nach dem Ausführungsbeispiel gemäß Fig. 6 weist ein nicht dargestelltes, weiteres seitliches Gestängeteil auf, das zum Aufspannen der seitlichen Wirkfläche 13 dient.

In den zuvor beschriebenen Ausführungsbeispielen sind zwischen den Polsterungen 8 und den Rahmen der Überrollbügel 2, 3 die Aussparungen 45 vorhanden, die die Gestängeteile 18 bis 20 und 51, 52 aufnehmen können. Es ist der Einfachheit halber auch möglich, auf diese Aussparungen zu verzichten, so dass die Gestängeteile 18 bis 20 und 51, 52 in ihren ein- und ausgefahrenen Zuständen außen auf den Seitenholmen 4, 5 der Überrollbügel 2, 3 zum Aufliegen kommen. Ferner sind Teile der Verstelleinrichtung 17 innerhalb des Querträgers 7 angeordnet, der vorzugsweise aus einem Aluminium-Strangpressprofil realisiert ist. Dies ist vorteilhafterweise besonders kostengünstig ausführbar. Es ist aber ebenso möglich, Teile der Verstelleinrichtung 17 außerhalb des Querträgers 7 anzuordnen.

## Patentansprüche

1. Cabriolet (1) mit zwei voneinander beabstandete Überrollbügeln (2, 3) und einem Windschott (9), das ein Flächengebilde (10) aufweist, das in einer Wirkstellung des Windschotts (9) zum Gewährleisten eines Windschutzes eine Wirkfläche (11 bis 14) aufspannt, wobei ein Ende (38) des Flächengebildes (10) an einer verstellbaren Verstelleinrichtung (17) befestigt ist und die Verstelleinrichtung (17) so ausgestaltet und angeordnet ist, dass das an ihr befestigte Ende (38) des Flächengebildes (10) von einem Seitenbereich des einen Überrollbügels (2, 3) zu einem Seitenbereich des anderen Überrollbügels (2, 3) verfahrbar ist und wobei die beiden Seitenbereiche einander benachbart sind, **dadurch gekennzeichnet, dass** wenigstens ein anderes Ende (37, 39) des Flächengebildes (10) an der Verstelleinrichtung (17) befestigt ist und diese ferner so ausgestaltet und angeordnet ist, dass das an ihr befestigte wenigstens eine andere Ende (37, 39) des Flächengebildes (10) von einem äußeren Seitenbereich wenigstens eines der Überrollbügel (2, 3) nach außen verfahrbar ist.

2. Cabriolet nach Anspruch 1, **dadurch gekennzeichnet, dass** das Flächengebilde (10) zwei Flächengebildeteile (15, 16) aufweist, wobei zwei Enden (37, 38) des einen Flächengebildeteiles (15) an der Verstelleinrichtung (17) befestigt sind und diese so ausgestaltet und angeordnet ist, dass das an ihr befestigte eine Ende (38) des einen Flächengebildeteils (15) von dem Seitenbereich des einen Überrollbügels (2) zu dem Seitenbereich des anderen Überrollbügels (3) nach innen und das an ihr befestigte andere Ende (37) des einen Flächengebildeteils (15) von dem äußeren Seitenbereich des einen Überrollbügels (2) nach außen verfahrbar ist, und ein Ende (39) des anderen Flächengebildeteiles (16) an dem anderen Überrollbügel (3) befestigt ist und ein anderes Ende (40) des anderen Flächengebildeteiles (16) an der Verstelleinrichtung (17) befestigt und diese so ausgestaltet und angeordnet ist, dass das an ihr befestigte eine Ende (39) des anderen Flächengebildeteils (16) von dem äußeren Seitenbereich des anderen Überrollbügels (3) nach außen verfahrbar ist.

3. Cabriolet nach einem der vorhergehenden Ansprüche, **dadurch gekennzeichnet, dass** die Verstelleinrichtung (17) ein oder mehrere verstellbare Gestängeteile (18 bis 20; 51, 52) zum Befestigen des bzw. der Enden (37 bis 39) des Flächengebildes (10) aufweist.

4. Cabriolet nach Anspruch 3, **dadurch gekennzeichnet, dass** wenigstens ein verstellbares Gestängeteil (19; 51, 52) verschwenkbar gelagert ist.

5. Cabriolet nach Anspruch 4, **dadurch gekennzeichnet, dass** das Ende (38) des Flächengebildes (10), das von dem Seitenbereich des einen Überrollbügels (2, 3) zu dem Seitenbereich des anderen Überrollbügels (2, 3) verfahrbar ist, an einem verschwenkbaren Gestängeteil (19) befestigt ist und das Gestängeteil (19) an einer verschiebbaren Verschiebeeinrichtung (30) verschwenkbar gelagert ist, die in einer Schiene (26) geführt ist.

6. Cabriolet nach Anspruch 5, **dadurch gekennzeichnet, dass** in der Schiene (26) zwei Anschläge (31, 32) zum Begrenzen des Verschiebens der Verschiebeeinrichtung (30) angeordnet sind, wobei der eine der Anschläge (31, 32) dem Seitenbereich des einen Überrollbügels (2, 3) und der andere der Anschläge (31, 32) dem Seitenbereich des anderen Überrollbügels (2, 3) zugeordnet ist.

7. Cabriolet nach einem der vorhergehenden Ansprüche, **dadurch gekennzeichnet, dass** die Verstelleinrichtung (17) zum Verfahren des oder der Enden (37 bis 39) des Flächengebildes (10) ein bzw. mehrere Schubstangen (27, 28, 34) aufweist.

8. Cabriolet nach Anspruch 7, **dadurch gekennzeichnet, dass** die ein oder mehreren Schubstangen (27, 28, 34) in ein bzw. mehreren Schienen (25, 26, 35) geführt sind.

9. Cabriolet nach einem der Ansprüche 3 bis 6 und nach Anspruch 8 oder 9, **dadurch gekennzeichnet, dass** die ein oder mehreren verstellbaren Gestängeteile (18 bis 20) mit den ein bzw. mehreren Schubstangen (27, 28, 34) verbunden sind.

10. Cabriolet nach Anspruch 5 oder 6 und nach Anspruch 9, **dadurch gekennzeichnet, dass** der verschwenkbare Gestängeteil (19), an dem das Ende (38) des Flächengebildes (10) befestigt ist, das von dem Seitenbereich des einen Überrollbügels (2, 3) zu dem Seitenbereich des anderen Überrollbügels (2, 3) verfahrbar ist, ein in Richtung der Längserstreckung des verschwenkbaren Gestängeteils (19) ausgebildetes Langloch (33) aufweist, in dem die mit dem verschwenkbaren Gestängeteil (19) verbundene Schubstange (34) geführt ist.

11. Cabriolet nach einem der Ansprüche 7 bis 10, **dadurch gekennzeichnet, dass** die Schubstangen (27, 28, 34) mittels eines Antriebs (29, 36, 43, 44) verschiebbar sind.

12. Cabriolet nach einem der vorhergehenden Ansprüche, **dadurch gekennzeichnet, dass** ein sich in Querrichtung des Cabriolets (1) erstreckender Querträger (7) vorhanden ist, in dem die Überrollbügel (2, 3) gelagert und die Verstelleinrichtung (17) zumindest teilweise angeordnet ist.

13. Cabriolet nach einem der vorhergehenden Ansprüche, **dadurch gekennzeichnet, dass** das Flächengebilde (10) einen insbesondere netzförmigen Stoff aufweist.

14. Cabriolet nach einem der vorhergehenden Ansprüche, **dadurch gekennzeichnet, dass** die Überrollbügel (2, 3) zum Passagierraum hin eine Polsterung (8) aufweisen und zwischen dem Überrollbügel (2, 3) und der Polsterung (8) Aussparungen (45) zumindest für Teile der Verstelleinrichtung (17) und/oder des Flächengebildes (10) vorgesehen sind.

15. Cabriolet nach einem der vorhergehenden Ansprüche, **dadurch gekennzeichnet, dass** die Überrollbügel (2, 3) feststehende Überrollbügel (2, 3) sind.

## Claims

1. Convertible (1) with two roll bars (2, 3) with a separation distance, and a windbreaker (9) which has a sheet-like structure (10) which defines an effective surface (11 to 14) in order, in an effective position of the windbreaker (9), to ensure protection from the wind, wherein one end (38) of the sheet-like structure (10) is fastened to an adjustable adjusting device (17), and the adjusting device (17) is configured and arranged in such a manner that that end (38) of the sheet-like structure (10) which is fastened thereto is movable from a side region of the one roll bar (2, 3) to a side region of the other roll bar (2, 3), and wherein the two side regions are mutually adjacent, **characterized in that** at least one other end (37, 39) of the sheet-like structure (10) is fastened to the adjusting device (17), and the latter is furthermore configured and arranged in such a manner that at least one other end (37, 39) of the sheet-like structure (10) which is fastened thereto is movable outwards from an outer side region of at least one of the roll bars (2, 3).

2. Convertible according to Claim 1, **characterized in that** the sheet-like structure (10) has two sheet-like structure parts (15, 16), two ends (37, 38) of the one sheet-like structure part (15) being fastened to the adjusting device (17), and the latter being configured and arranged in such a manner that one end (38) of the one sheet-like structure part (15) which is fastened thereto is movable inwards from the side region of the one roll bar (2) to the side region of the other roll bar (3) and that the other end (37) of the one sheet-like structure part (15) which is fastened thereto is movable outwards from the outer side region of the one roll bar (2), and one end (39) of the other sheet-like structure part (16) is fastened to the other roll bar (3), and another end (40) of the other sheet-like structure part (16) is fastened to the adjusting device (17), and the latter is configured and arranged in such a manner that one end (39) of the other sheet-like structure part (16) which is fastened thereto is movable outwards from the outer side region of the other roll bar (3).

3. Convertible according to one of the preceding claims, **characterized in that** the adjusting device (17) has one or more adjustable linkage parts (18 to 20; 51, 52) for the fastening of the end or of the ends (37 to 39) of the sheet-like structure (10).

4. Convertible according to Claim 3, **characterized in that** at least one adjustable linkage part (19; 51, 52) is mounted pivotably.

5. Convertible according to Claim 4, **characterized in that** that end (38) of the sheet-like structure (10) which is movable from the side region of the one roll bar (2, 3) to the side region of the other roll bar (2, 3) is fastened to a pivotable linkage part (19), and the linkage part (19) is mounted pivotably on a displaceable displacement device (30) which is guided in a rail (26).

6. Convertible according to Claim 5, **characterized in that** two stops (31, 32) for limiting the displacement of the displacement device (30) are arranged in the rail (26), one of the stops (31, 32) being assigned to the side region of the one roll bar (2, 3) and the other of the stops (31, 32) being assigned to the side region of the other roll bar (2, 3).

7. Convertible according to one of the preceding claims, **characterized in that** the adjusting device (17) has one or more connecting rods (27, 28, 34) for moving the end or the ends (37 to 39) of the sheet-like structure (10).

8. Convertible according to Claim 7, **characterized in that** the one or more connecting rods (27, 28, 34) are guided in one or more rails (25, 26, 35).

9. Convertible according to one of Claims 3 to 6 and according to Claim 8 or 9, **characterized in that** the one or more adjustable linkage parts (18 to 20) are connected to the one or more connecting rods (27, 28, 34).

10. Convertible according to Claim 5 or 6 and according to Claim 9, **characterized in that** the pivotable linkage part (19) to which that end (38) of the sheet-like structure (10) which is movable from the side region of the one roll bar (2, 3) to the side region of the other roll bar (2, 3) is fastened has an elongated hole (33) which is formed in the direction of the longitudinal extent of the pivotable linkage part (19) and in which the connecting rod (34) which is connected to the pivotable linkage part (19) is guided.

11. Convertible according to one of Claims 7 to 10, **characterized in that** the connecting rods (27, 28, 34) are displaceable by means of a drive (29, 36, 43, 44).

12. Convertible according to one of the preceding claims, **characterized in that** there is a transverse support (7) which extends in the transverse direction of the convertible (1) and in which the roll bars (2, 3) are mounted and the adjusting device (17) is at least partially arranged.

13. Convertible according to one of the preceding claims, **characterized in that** the sheet-like structure (10) has an in particular net-like material.

14. Convertible according to one of the preceding claims, **characterized in that** the roll bars (2, 3) have padding (8) towards the passenger compartment, and cutouts (45) at least for parts of the adjusting device (17) and/or of the sheet-like structure (10) are provided between the roll bar (2, 3) and the padding (8).

15. Convertible according to one of the preceding claims, **characterized in that** the roll bars (2, 3) are fixed roll bars (2, 3).

## Revendications

1. Cabriolet (1) doté de deux arceaux de sécurité (2, 3) espacés l'un par rapport à l'autre et d'un pare-vent (9) comportant une formation superficielle (10) qui tend une surface active (11 à 14) dans une position active du pare-vent (9) pour garantir une protection contre le vent, une extrémité (38) de la formation superficielle (10) étant fixée à un dispositif de réglage (17) réglable et le dispositif de réglage (17) étant configuré et disposé de telle sorte que l'extrémité (38) y étant fixée de la formation superficielle (10) peut être déplacée d'une zone latérale du premier arceau de sécurité (2, 3) à une zone latérale de l'autre arceau de sécurité (2, 3) et les deux zones latérales étant connexes, **caractérisé en ce qu'**au moins une autre extrémité (37, 39) de la formation superficielle (10) est fixée au dispositif de réglage (17) et que celui-ci est en outre configuré et disposé de telle sorte que l'au moins une autre extrémité (37, 39) fixée à lui de la formation superficielle (10) peut être déplacée d'une zone latérale extérieure d'au moins un des arceaux de sécurité (2, 3) vers l'extérieur.

2. Cabriolet selon la revendication 1, **caractérisé en ce que** la formation superficielle (10) comporte deux parties de formation superficielle (15, 16), deux extrémités (37, 38) de la première partie de formation superficielle (15) étant fixées au dispositif de réglage (17) et celui-ci étant configuré et disposé de telle sorte au niveau de la première extrémité (38) fixée à lui de la première partie de formation superficielle (15) qu'elle peut être déplacée vers l'intérieur de la zone latérale du premier arceau de sécurité (2) à la zone latérale de l'autre arceau de sécurité (3) et que l'autre extrémité (37) fixée à lui de la première partie de formation superficielle (15) peut être déplacée de la zone latérale extérieure du premier arceau de sécurité (2) vers l'extérieur, et **en ce qu'**une extrémité (39) de l'autre partie de formation superficielle (16) est fixée à l'autre arceau de sécurité (3) et qu'une autre extrémité (40) de l'autre partie de formation superficielle (16) est fixée au dispositif de réglage (17) et **en ce que** celui-ci est configuré et disposé de telle sorte que la première extrémité (39) fixée à lui de l'autre partie de formation superficielle (16) peut être déplacée de la zone latérale extérieure de l'autre arceau de sécurité (3) vers l'extérieur.

3. Cabriolet selon l'une quelconque des revendications précédentes, **caractérisé en ce que** le dispositif de réglage (17) comporte une ou plusieurs parties de tringle (18 à 20 ; 51, 52) réglables pour fixer la et/ou les extrémités (37 à 39) de la formation superficielle (10).

4. Cabriolet selon la revendication 3, **caractérisé en ce qu'**au moins une partie de tringle (19 ; 51, 52) réglable est disposée de façon à pouvoir pivoter.

5. Cabriolet selon la revendication 4, **caractérisé en ce que** l'extrémité (38) de la formation superficielle (10) pouvant être déplacée de la zone latérale du premier arceau de sécurité (2, 3) à la zone latérale de l'autre arceau de sécurité (2, 3) est fixée à une partie de tringle (19) pouvant pivoter et **en ce que** la partie de tringle (19) est disposée de façon pivotante à un dispositif de déplacement (30) mobile guidé dans un rail (26).

6. Cabriolet selon la revendication 5, **caractérisé en ce que** deux butées (31, 32) sont disposées dans le rail (26) pour limiter le déplacement du dispositif de déplacement (30), la première butée (31, 32) étant associée à la zone latérale du premier arceau de sécurité (2, 3) et l'autre butée (31, 32) étant associée à la zone latérale de l'autre arceau de sécurité (2, 3).

7. Cabriolet selon l'une quelconque des revendications précédentes, **caractérisé en ce que** le dispositif de réglage (17) comporte une et/ou plusieurs tiges de poussée (27, 28, 34) pour déplacer la ou les extrémités (37 à 39) de la formation superficielle (10).

8. Cabriolet selon la revendication 7, **caractérisé en ce que** la ou les tiges de poussée (27, 28, 34) sont guidées dans un et/ou plusieurs rails (25, 26, 35).

9. Cabriolet selon l'une quelconque des revendications 3 à 6 et selon la revendication 8 ou 9, **caractérisé en ce que** la ou les parties de tringle (18 à 20) réglables sont reliées à la et/ou aux tiges de poussée (27, 28, 34).

10. Cabriolet selon la revendication 5 ou 6 et selon la revendication 9, **caractérisé en ce que** la partie de tringle (19) pivotante est fixée à l'extrémité (38) de la formation superficielle (10) pouvant être déplacée de la zone latérale du premier arceau de sécurité (2, 3) à la zone latérale de l'autre arceau de sécurité (2, 3) et **en ce qu'**elle comporte un trou oblong (33) réalisé en direction de l'extension longitudinale de la partie de tringle (19) pivotante dans lequel la tige de poussée (34) reliée à la partie de tringle (19) pivotante est guidée.

11. Cabriolet selon l'une quelconque des revendications 7 à 10, **caractérisé en ce que** les tiges de poussée (27, 28, 34) peuvent être déplacées de façon coulissante à l'aide d'un engrenage (29, 36, 43, 44).

12. Cabriolet selon l'une quelconque des revendications précédentes, **caractérisé par** la présence d'une traverse (7) s'étendant dans la direction transversale du cabriolet (1) et dans laquelle les arceaux de sécurité (2, 3) sont disposés et dans laquelle le dispositif de réglage (17) est au moins en partie disposé.

13. Cabriolet selon l'une quelconque des revendications précédentes, **caractérisé en ce que** la formation superficielle (10) comporte une matière notamment réticulaire.

14. Cabriolet selon l'une quelconque des revendications précédentes, **caractérisé en ce que** les arceaux de sécurité (2, 3) sont pourvus d'un rembourrage (8) en direction de l'habitacle et que des ouvertures (45) sont prévues entre l'arceau de sécurité (2, 3) et le rembourrage (8) au moins pour les parties du dispositif de réglage (17) et/ou de la formation superficielle (10).

15. Cabriolet selon l'une quelconque des revendications précédentes, **caractérisé en ce que** les arceaux de sécurité (2, 3) sont des arceaux de sécurité (2, 3) fixes.
